(19) Europäisches Patentamt
European Patent Office
Office européen des brevets

(11) **EP 3 309 585 A1**

(12) **EUROPEAN PATENT APPLICATION**

(43) Date of publication:
**18.04.2018 Bulletin 2018/16**

(51) Int Cl.:
***G01S 19/07*** *(2010.01)*

(21) Application number: **17196693.0**

(22) Date of filing: **16.10.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **17.10.2016 JP 2016203618**<br><br>(71) Applicant: **Satellite Positioning Research and Application Center Tokyo 105-0011 (JP)** | (72) Inventors:<br> • **MIKAMI, Izumi**<br>  **Minato-ku, Tokyo 105-0011 (JP)**<br> • **SAITO, Masayuki**<br>  **Minato-ku, Tokyo 105-0011 (JP)**<br> • **ASARI, Kouki**<br>  **Minato-ku, Tokyo 105-0011 (JP)**<br><br>(74) Representative: **Robson, Aidan John Reddie & Grose LLP The White Chapel Building 10 Whitechapel High Street London E1 8QS (GB)** |

(54) **POSITIONING PROCESSING SYSTEM, METHOD, COMPUTER PROGRAM, POSITIONING PROCESSING DEVICE, AND USER TERMINAL**

(57)    [Problem]
Provided is a technique capable of fulfilling a need for more precise and simple positioning processing.
[Solution]

A positioning processing device is configured to accurately perform positioning processing using satellite positioning correction data from a satellite.

FIG.2

**Description**

TECHNICAL FIELD

The present invention relates to a positioning processing system, a method, a computer program, a positioning processing device, and a user terminal.

BACKGROUND ART

(1) In a vehicle capable of performing automated driving or the like, an accurate position is derived by a reference station acquiring observation data and transmitting the observation data to a positioning device, and the positioning device executing precise positioning processing. The acquired accurate position is used for the automated driving or the like.

(2) In a technique of avoiding collision between a vehicle and a pedestrian, accuracy in the positioning of the pedestrian to be obtained by the vehicle is more accurate so that it becomes possible to realize automated driving of the vehicle.

SUMMARY OF INVENTION

[Technical Problem]

(1) Communication between the reference station and the positioning processing device is performed using a weak radio wave, due to restrictions by the Radio Act and other laws, and thus involves a risk of crosstalk occurrence. Moreover, it involves a cost for providing the reference station. Even in the case where an existing continuously operating reference station is used as the reference station, there is a need for communication between the continuously operating reference station and the positioning processing device, wherein such communication is generally realized by using a mobile phone network. Thus, a communication cost is required.
(2) In a technique of avoiding collision between a vehicle and a pedestrian using a positioning device it is difficult to enable the vehicle to obtain the accurate position of the pedestrian.

Thus, there is a need for more precise and simple positioning processing.

[Solution to Technical Problem]

According to an aspect of the present invention, there is provided a positioning processing device which comprises: a positioning calculation unit operable to perform extraction of information necessary for performing point positioning, and/or point positioning, based on a positioning signal received from a navigation satellite, and execute positioning processing having an accuracy higher than that of the point positioning, using second observation data-related information; and an observation data-generating calculation unit operable to: receive satellite positioning correction data and information based on the positioning signal; receive information about the point positioning from the positioning calculation unit; generate the second observation data-related information based on a result of the point positioning, derived from the information based on the positioning signal, the satellite positioning correction data, and the information about the point positioning; and transmit the second observation data-related information to the positioning calculation unit.
Preferably, in the positioning processing device according to the aspect of the present invention, the information based on the positioning signal comprises at least ephemeris data of the navigation satellite.
Preferably, in the positioning processing device according to the aspect of the present invention, the information based on the positioning signal is transmitted from the navigation satellite to the positioning processing device, or transmitted from the navigation satellite to the positioning processing device via an additional device.
Preferably, in the positioning processing device according to the aspect of the present invention, the satellite positioning correction data is transmitted from the navigation satellite or a different navigation satellite to the observation data-generating calculation unit, or transmitted from the navigation satellite or a different navigation satellite to the observation data-generating calculation unit, via an additional device.
In the positioning processing device according to the aspect of the present invention, the positioning calculation unit and the observation data-generating calculation unit may be disposed in a same housing.

In the positioning processing device according to the aspect of the present invention, the positioning calculation unit and the observation data-generating calculation unit may be disposed, respectively, in different housings.

According to an aspect of the present invention, there is provided a method to be executed by a positioning calculation unit and an observation data-generating calculation unit. The method comprises the step of: performing, by the positioning calculation unit, extraction of information necessary for performing point positioning, and/or point positioning, based on a positioning signal received from a navigation satellite; receiving, by the observation data-generating calculation unit, satellite positioning correction data and information based on the positioning signal; receiving, by the observation data-generating calculation unit, information about the point positioning from the positioning calculation unit; generating, by the observation data-generating calculation unit, the second observation data-related information, based on a result of the point positioning, derived from the information based on the positioning signal, the satellite positioning correction data, and the information about the point positioning; and transmitting, by the observation data-generating calculation unit, the second observation data-related information to the positioning calculation unit.

Preferably, the method according to the aspect of the present invention further comprises the step of executing, by the positioning calculation unit, positioning processing having an accuracy higher than that of the point positioning, using the second observation data-related information.

According to a third aspect of the present invention, there is provided a computer program to be executed by a positioning calculation unit and an observation data-generating calculation unit. The computer program comprising the step of: performing, by the positioning calculation unit, extraction of information necessary for performing point positioning, and/or point positioning, based on a positioning signal received from a navigation satellite; receiving, by the observation data-generating calculation unit, satellite positioning correction data and information based on the positioning signal; receiving, by the observation data-generating calculation unit, information about the point positioning from the positioning calculation unit; generating, by the observation data-generating calculation unit, the second observation data-related information, based on a result of the point positioning, derived from the information based on the positioning signal, the satellite positioning correction data, and the information about the point positioning; and transmitting, by the observation data-generating calculation unit, the second observation data-related information to the positioning calculation unit.

Preferably, the computer program according to the aspect of the present invention further comprises the step of executing, by the positioning calculation unit, positioning processing having an accuracy higher than that of the point positioning, using the second observation data-related information.

According to a fourth aspect of the present invention, there is provided a recording medium recording the above computer program therein.

According to a fifth aspect of the present invention, there is provided an observation data-generating calculation unit for use with a positioning calculation unit operable to perform extraction of information necessary for performing point positioning, and/or point positioning, based on a positioning signal received from a navigation satellite, and execute positioning processing having an accuracy higher than that of the point positioning, using second observation data-related information. The observation data-generating calculation unit is configured to: receive information about the point positioning, from the positioning calculation unit; receive satellite positioning correction data and information based on the positioning signal; generate the second observation data-related information, based on a result of the point positioning, derived from the information based on the positioning signal, the satellite positioning correction data and the information about the point positioning; and transmit the second observation data-related information to the positioning calculation unit.

Preferably, in the observation data-generating calculation unit according to the aspect of the present invention, the information based on the positioning signal is received from the positioning calculation unit.

Preferably, in the observation data-generating calculation unit according to the aspect of the present invention, at least a part of the satellite positioning correction data is received from the navigation satellite or a different navigation satellite, or received from the navigation satellite or a different navigation satellite via an additional device, and information for generating the second observation data-related information is received from the navigation satellite via an additional device.

According to a sixth aspect of the present invention, there is provided an apparatus which comprises the above positioning processing device, or the above observation data-generating calculation unit, wherein the apparatus is operable to perform control using the result of the higher-accuracy positioning processing.

Preferably, in the positioning processing device according to the aspect of the present invention, the positioning calculation unit comprises a point positioning section operable to perform point positioning, and a higher-accuracy positioning section operable to perform positioning processing having an accuracy higher than that of the point positioning, wherein the point positioning section and the higher-accuracy positioning section are disposed, respectively, in different housings.

According to a seventh aspect of the present invention, there is provided a positioning processing system which comprises: a terminal for acquiring observation data-related information, based on a positioning signal received from a navigation satellite; and a movable body-mounted positioning device for executing positioning processing to specify a position of the movable body-mounted positioning device, wherein the movable body-mounted positioning device is operable to determine a position of the terminal using the observation data-related information received from the terminal, and specify a distance between the position of the movable body-mounted positioning device and the position of the terminal.

Preferably, in the positioning processing system according to the aspect of the present invention, the terminal is operable, in response to detecting that a distance between the terminal and the movable body-mounted positioning device falls within a given range, to transmit the observation data-related information to the movable body-mounted positioning device.

Preferably, in the positioning processing system according to the aspect of the present invention, the movable body-mounted positioning device is operable, depending on the distance between the position of the movable body-mounted positioning device and the position of the terminal, to execute braking processing and/or alert processing.

According to an eighth aspect of the present invention, there is provided a movable body-mounted positioning device which is configured to: execute positioning processing to specify a position of the movable body-mounted positioning device; receive, from a terminal, observation data-related information based on a positioning signal received from a navigation satellite to determine a position of the terminal using the observation data-related information; and specify a distance between the position of the movable body-mounted positioning device and the position of the terminal.

Positioning processing is accurately performed using satellite positioning correction data from a satellite.

BRIEF DESCRIPTION OF DRAWINGS

FIG. 1 is a block diagram depicting one example of a conventional positioning processing system for use in an automated vehicle driving technique or the like.
FIG. 2 is a block diagram depicting a positioning processing system according to a first embodiment of the present invention.
FIG. 3 is a flow chart depicting processing to be executed in the first embodiment.
FIG. 4 is a block diagram depicting a configuration of a device for executing software.
FIG. 5 is a block diagram depicting a positioning processing system according to a second embodiment of the present invention.
FIG. 6 is a flow chart depicting processing to be executed in the second embodiment.

DESCRIPTION OF EMBODIMENTS

< Conventional Techniques >

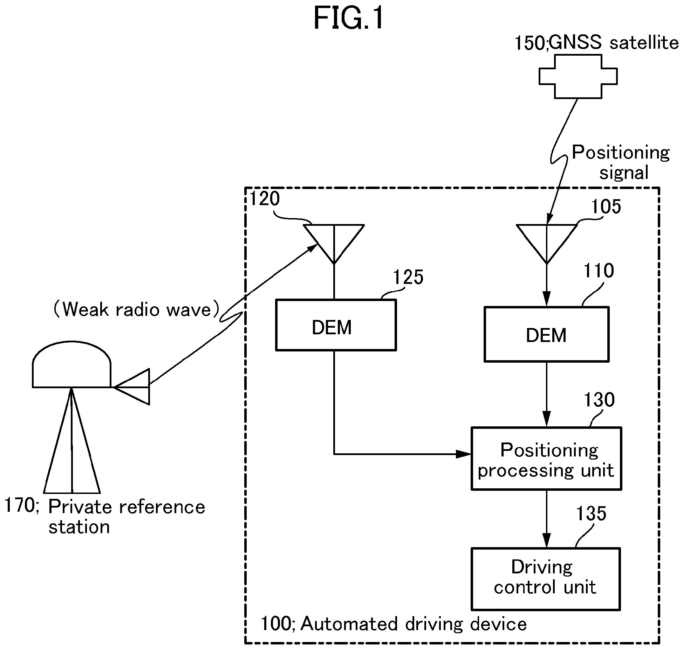

FIG. 1 depicts one example a conventional positioning processing system for use in an automated vehicle driving technique or the like. In an automated driving device 100, a first receiving unit 105 is operable to receive a positioning signal from a navigation satellite 150 such as a GNSS (Global Navigation Satellite System), and a second receiving unit 120 is operable to receive, from a private reference station 170, observation data at the private reference station 170 and/or correction data for the observation data (one or both of the two pieces of data will hereinafter be referred to as "second observation data-related information") and information indicative of a self-position. A first demodulator 110 is operable to demodulate the received positioning signal to thereby obtain first observation data. A second demodulator 125 is operable to demodulate the received second observation data-related information and the information indicative of the self position.

A positioning processing unit 130 is operable to execute positioning processing using the first observation data, the second observation data-related information and the information indicative of the self-position. As one example of a positioning processing method, a real time kinematic (RTK) method or the like has been known. A position derived by positioning processing using the RTK method has an error of a several centimeters to one meter, i.e., has a high degree of accuracy. Thus, a driving control unit 135 is operable to perform an automated vehicle driving control using such an accurate position derived by the positioning processing.

The private reference station 170 is operable to acquire positioning information from a GNSS satellite, and generate second observation data-related information, using the observation data at the private reference station 170, and a self-position measured by some other means with a given degree of accuracy. The private reference station 170 is operable to transmit the second observation data-related information and the self-position, to the receiving unit 120 via a given wireless line. In Japan, the given wireless transmission is a wireless transmission using a weak radio wave, wherein the number of channels is also restricted, due to restrictions by the Radio Act and other laws. Thus, the presence of a shielding object, a long communication distance, simultaneous operations of a plurality of positioning devices or the like is likely to cause failure in communication or crosstalk.

As another example of the positioning processing method, a continuously operating reference station set up by the government or the like can be used, instead of the private reference station. The device 100 is operable to perform point positioning, and transmit a rough position as a result of the point positioning to a central station via a mobile phone network or the like, and the central station is operable to generate second observation data-related information, based on the rough position, from observation information at three or more continuously operating reference stations. Then, the central station is operable to transmit the second observation data-related information and the rough position to the second receiving unit 120 via a wired line, or a wireless line such as a mobile phone network.

< First embodiment (example where precise positioning is performed using satellite positioning correction data) >

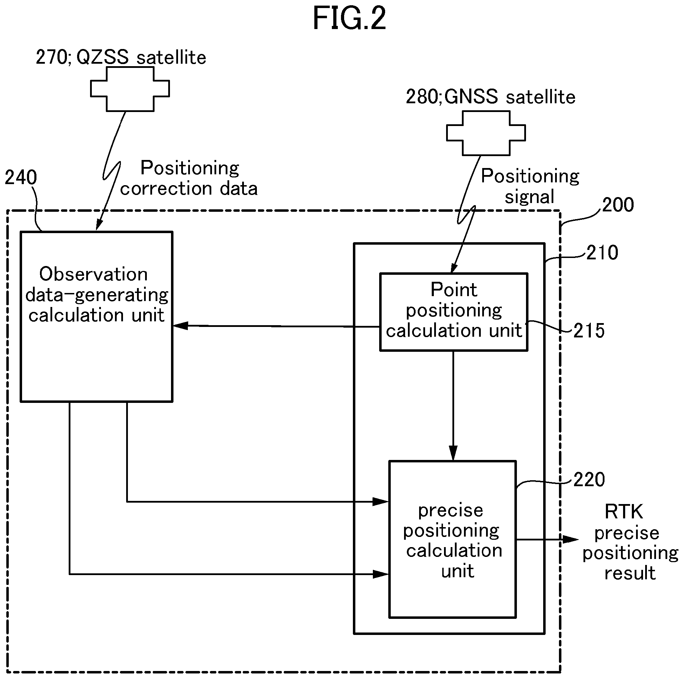

FIG. 2 depicts a positioning processing system according to an embodiment of the present invention.The positioning processing system comprises a positioning device 200, a plurality of GNSS satellites 280, and at least one QZSS (Quasi-Zenith Satellite System) satellite 270. The positioning device 200 is operable to receive positioning signals from the GNSS satellites 280 and receives satellite positioning correction data from the QZSS satellite 270. The positioning device 200 comprises a positioning calculation unit 210 and an observation data-generating calculation unit 240. The positioning calculation unit 210 comprises an point positioning calculation unit 215 and a precise positioning calculation unit 220.

The point positioning calculation unit 215 is operable to execute positioning processing based on the positioning signals from the GNSS satellites 280, to derive a result of the point positioning. This positioning processing may be the same as commonly-used processing which is implemented in navigation systems for mobile phones, smartphones, vehicles, marine vessels and the like. Generally, the point positioning result (position derived by the point positioning calculation unit 215) has an error of several meters to several tens of meters.

The point positioning calculation unit 215 is operable to transmit the point positioning result derived by calculation, and navigation messages obtained from the positioning signals, to the observation data-generating calculation unit 240, and to obtain first observation data from the positioning signals acquired from the GNSS satellites 280 and transmit the first observation data to the precise positioning calculation unit 220. In this embodiment, the point positioning result and the navigation messages are transmitted from the point positioning calculation unit 215 to the observation data-generating calculation unit 240. However, the above information to be transmitted may be any other information based on the positioning signals of the GNSS satellites 280, as long as it is based on the positioning signals of the GNSS satellites 280, obtainable from the GNSS satellites 280 by the point positioning calculation unit 215, and usable for generating after mentioned second observation data. For example, the information for generating the after mentioned second observation data may be a distance from a position of the point positioning result (point positioning result-based position) to each of the GNSS satellites 280, information for calculating the distance, or a combination of the point positioning result and the navigation messages.

In this embodiment, the point positioning result is derived as the information to be transmitted from the point positioning calculation unit 215 to the observation data-generating calculation unit 240. Alternatively, information necessary for performing point positioning may be transmitted, instead of the point positioning result. In this case, the point positioning calculation unit 215 may be configured to extract information necessary for performing point positioning, from the positioning signals received from the GNSS satellites 280, and the point positioning calculation unit 215 is configured to transmit the information necessary for performing point positioning to the observation data-generating calculation unit 240. Further, the observation data-generating calculation unit 240 may be configured to execute point positioning based on the information necessary for performing point positioning, as a substitute for the point positioning calculation unit 215. Thus, in the first embodiment, the information to be transmitted from the point positioning calculation unit 215 to the observation data-generating calculation unit 240 may be point positioning-related information. For example, the point positioning-related information may be one or more selected from the group comprising of: the point positioning result, information obtained by processing the point positioning result, the information necessary for performing point positioning, and other information.

In one specific example, the first observation data comprises one or both of two pieces of information indicative of a distance (pseudo-distance) from the positioning device 200 (or a receiving unit (not depicted) which receives signals from the GNSS satellites 280) to each of the GNSS satellites 280, and a phase of a carrier wave (carrier phase) received from each of the GNSS satellites 280. In one specific example, the first observation data may comprise information obtained by processing the information indicative of the pseudo-distance and the carrier phase, and other information.

The observation data-generating calculation unit 240 is operable, based on the point positioning result and the navigation messages received from the point positioning calculation unit 215, and satellite positioning correction data received from the QZSS satellite 270, to generate second observation data and/or a correction value for the second observation data. As an example, the second observation data may comprise one or both of the two pieces of information indicative of the distance (pseudo-distance) from the point positioning result-based position received from the point positioning calculation unit 215, to each of the GNSS satellites 280, and the phase of the carrier wave transmitted by each of the GNSS satellites 280. In one specific example, information generated by the observation data-generating calculation unit 240 may be second observation data-related information which comprises at least one of the second observation data and/or a correction value for the second observation data, information obtained by processing at least one of the second observation data and/or the correction value for the second observation data, and other information. In another specific example, the second observation data-related information may be information necessary for deriving one or both of the two pieces of information indicative of the distance (pseudo-distance) from the position of the positioning calculation unit 210 to each of the GNSS satellites 280, and the carrier phase received by the positioning calculation unit 210 from each of the GNSS satellites 280.

The observation data-generating calculation unit 240 is operable to transmit the second observation data-related information, and the point positioning result-based position received from the point positioning calculation unit 215, to the precise positioning calculation unit 220. In one specific example, the precise positioning calculation unit 220 may be configured to receive the point positioning result-based position from the point positioning calculation unit 215. The precise positioning calculation unit 220 is operable, based on the first observation data, the second observation data-related information, and the point positioning result-based position, to generate, as a precise positioning result, a position which is more accurate than the point positioning result-based position derived in the point positioning calculation unit 215. For example, the precise positioning calculation unit 220 is configured to generate a positioning result using the RTK method. It is known that the point positioning result has an error of several meters to several tens of meters, and it is also known that the precise positioning result has an error of several centimeters to one meter.

In this embodiment, there is no need to provide a private reference station which is required to precisely measure a self-position in advance as in a conventional positioning processing system so that it becomes possible to facilitate a reduction in cost. Further, in this embodiment, a signal from the QZSS satellite 270 is used, instead of a weak signal from a private reference station, so that it becomes possible to avoid the conventional problem such as failure in communication or crosstalk which would otherwise be caused by the presence of a shielding object, a long communication distance, of simultaneous operations of a plurality of positioning units. Further, in the conventional techniques, when an continuously operating reference station is used instead of a private reference station, the second observation data-related information acquired from the continuously operating reference station and position information of the continuously operating reference station are generally subject to fees, and are transmitted to a positioning device via a mobile phone network or the like. On the other hand, in this embodiment, such information is transmitted from the QZSS satellite 270 to the positioning device 200 without the intermediary of a mobile phone network or the like. Thus, the positioning processing system according to this embodiment can cut costs for information delivery or communication with respect to an continuously operating reference station.

In the conventional techniques, the second observation data-related information is acquired from a private reference station. On the other hand, in this embodiment, information generating the second observation data is acquired from the QZSS satellite 270 and the second observation data is generated. In other words, the positioning processing system according to this embodiment can be achieved by partially modifying the means to generate the second observation data-related information in the conventional positioning processing system. Thus, in an automated driving vehicle or the like already employing the conventional positioning processing system, the positioning processing system according to this embodiment can be implemented by replacing the above means in the conventional positioning processing system with a corresponding means in this embodiment so that it is possible to apply the positioning processing system according to this embodiment to an existing positioning processing system in an easier manner. Therefore, the positioning processing system according to this embodiment can contribute to further popularization of an existing satellite positioning device, an automated driving vehicle and the like, and the fulfillment of demands for conservation or upgrading thereof.

In other example, the positioning calculation unit 210 (specifically, a receiving unit for receiving the signals from the GNSS satellites 280) is disposed in a different housing from that of the observation data-generating calculation unit 240 (specifically, a receiving unit for receiving the signal from the QZSS satellite 270). In this case, the point positioning calculation unit 215 is disposed in adjacent relation to the observation data-generating calculation unit 240. For example, a distance between the positioning calculation unit 210 and the observation data-generating calculation unit 240 may be set in a range enabling the positioning calculation unit 210 to use the second observation data-related information generated by the observation data-generating calculation unit 240 in precise positioning processing. In one specific example, a distance from the point positioning calculation unit 215 to the observation data-generating calculation unit 240 can be selectively determined in view of a relationship between positioning error and distance, determined by a positioning processing method in the precise positioning calculation unit 220. In the case where the positioning processing method is the RTK method, the positioning error can be assumed to be several centimeters and about ten centimeters, respectively, when the distance is 1 Km or less and when the distance is 10 Km or less. Thus, when it is necessary to obtain the precise positioning result with a high degree of accuracy, it is desirable that the point positioning calculation unit 215 is located within several meters from the observation data-generating calculation unit 240.

In the case where the positioning calculation unit 210 and the observation data-generating calculation unit 240 are disposed, respectively, in different housings, communication between the positioning calculation unit 210 and the observation data-generating calculation unit 240 is realized using respective communication units thereof via a wired line or a wireless line.

In one specific example, the point positioning calculation unit 215 and the precise positioning calculation unit 220 in the positioning calculation unit 210 may be disposed, respectively, in different housings. In the case where the point positioning calculation unit 215 and the precise positioning calculation unit 220 are disposed, respectively, in different housings, communication between the point positioning calculation unit 215 and the precise positioning calculation unit 220, communication between the point positioning calculation unit 215 and the observation data-generating calculation unit 240, and communication between the observation data-generating calculation unit 240 and the precise positioning calculation unit 220, are realized using respective communication units thereof via a wired line or a wireless line. In this embodiment, the precise positioning calculation unit 220 may be devoid of a receiving unit for receiving a signal from a satellite.

In another embodiment, when the point positioning calculation unit 215 and the precise positioning calculation unit 220 are disposed, respectively, in different housings, the point positioning calculation unit 215 or the precise positioning calculation unit 220 may be disposed in the same housing as that of the observation data-generating calculation unit 240.

The observation data-generating calculation unit 240 is operable to receive the signal from the QZSS satellite 270. Examples of a previously known device having such a receiving unit include an L6 receiving antenna.

< Processing in observation data-generating calculation unit and precise positioning calculation unit >

One example of positioning processing in the first embodiment will be described in detail. The following description will be made for the purpose of facilitating understanding of the embodiment but not intended to limit the technical scope of the present invention. The technical scope of the present invention shall be construed only based on the appended claims.

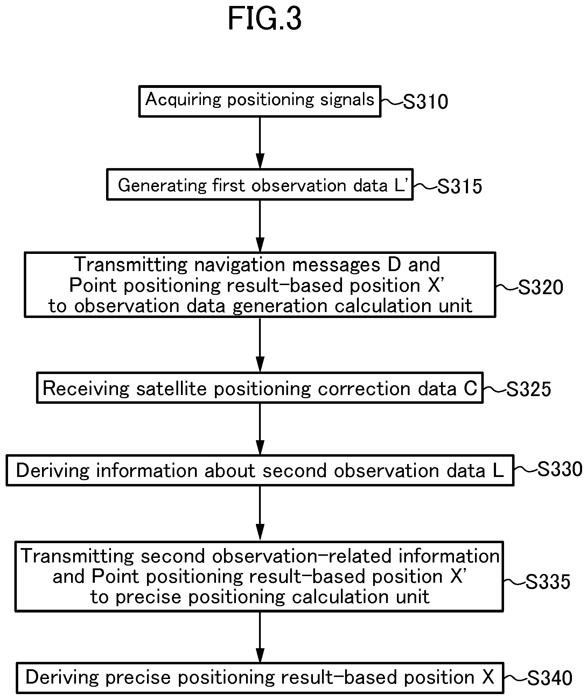

FIG. 3 is a flow chart depicting processing to be executed in the first embodiment. For the following description, various definitions will be made as follows:

- Position based on precise positioning result using GNSS satellites and QZSS satellite: $X(x, y, z)$
- Position based on point positioning result using GNSS satellites: $X'(x', y', z')$
- Navigation message (ephemeris data of GNSS satellite): D
- Second observation data (X' and GNSS satellite observation data at X' generated by calculation): L
- First observation data (GNSS satellite observation data): L'
- Satellite positioning correction data: C
- Position of GNSS satellite: $Xs(x_s, y_s, z_s)$

The point positioning calculation unit 215 acquires positioning signals from the GNSS satellites 280 (step S310). The point positioning calculation unit 215 executes an point positioning processing based on the positioning signals from the GNSS satellites 280 to thereby derive the point positioning result-based position X', and further generate the first observation data L' based on the positioning signals from the GNSS satellites 280 (step S315). The positioning calculation unit 210 transmits the navigation messages D obtained from the positioning signals and the point positioning result-based position X', to the observation data-generating calculation unit 240 (step S320).

The observation data-generating calculation unit 240 receives the satellite positioning correction data C from the at least one QZSS satellite 270 (step S325). The satellite positioning correction data C comprises at least one of a satellite clock error correction value, a satellite signal bias error correction value, a satellite orbit error correction values, a tropospheric propagation error correction value, and an ionosphere propagation error correction value. For example, the satellite positioning correction data C is generated in a mode suited to positioning calculation using the RTK-PPP method, such as an SSR (State Space Representation) mode.

The observation data-generating calculation unit 240 derives the second observation data L using the navigation messages D, the point positioning result-based position X' and the satellite positioning correction data C (step S330). The point positioning result-based position X' is within the range of several meters to several tens of meters with respect to a true position of the point positioning calculation unit 215. Thus, except for a difference from a true distance to each navigation satellite determined by a distance between the point positioning result-based position X' and the true position of the point positioning calculation unit 215, a difference between observation data to be observed at the point positioning result-based position X' and observation data to be observed at the true position of the point positioning calculation unit 215 can be assumed to be negligibly small. Because, when the point positioning result-based position X' and the true position of the point positioning calculation unit 215 are within a relatively small distance range of several meters to several tens of meters, there is almost no change in structure of the ionosphere and troposphere between a radio wave propagation path extending from each navigation satellite to the point positioning calculation unit 215 and a radio wave propagation path extending from each navigation satellite to the point positioning result-based position X', so that the observation data may be deemed to be identical between the two positions. Further, a plurality of navigation satellites to be observed at the point positioning result-based position X' are the same as those to be observed at the true position of the point positioning calculation unit 215, so that errors unique to each satellite (satellite clock error, satellite signal bias error, satellite orbit error) are also identical at the two positions. This means that the satellite positioning correction data C is identical at the point positioning result-based position X' and at the true position of the point positioning calculation unit 215. Thus, data obtained by adding the satellite positioning correction data C to a geometric distance between the point positioning result-based position X' and each satellite, in which the observation data-generating calculation unit 240 calculates the geometric distance using the navigation message D of each navigation satellite and the point positioning result-based position X', can be handled as observation data observed at the point positioning result-based position X'.

The observation data-generating calculation unit 240 obtains respective positions Xs of the GNSS satellites 280 from the navigation messages D, and calculates a distance between each of the positions Xs of the GNSS satellites 280 and the point positioning result-based position X'. The observation data-generating calculation unit 240 adds the satellite positioning correction data C to each of the calculated distances to generate the second observation data L. The second observation data L can be deemed as observation data at the point positioning result-based position X' which serves as a calculational position of a reference station.

The observation data-generating calculation unit 240 transmits the second observation-related information and the point positioning result-based position X' to the precise positioning calculation unit 220 (step S335). The precise positioning calculation unit 220 performs precise positioning calculation by the RTK method using the first observation data L' as the point positioning result generated by the point positioning calculation unit 215, the second observation data L generated by the observation data-generating calculation unit 240, and the point positioning result-based position X', to thereby derive the precise positioning result-based position X (step S340). In this embodiment, the calculation by the RTK method can be performed by relatively comparing the first observation data L' with the second observation data L.

In this embodiment, the precise positioning calculation by the RTK method can be performed, so that an error of the precise positioning result-based position X is reduced to several centimeters. Although the first embodiment has been described based on an example where the two pieces of observation data are used as information for performing the precise positioning calculation by the RTK method, a correction value for the observation data may be used or may be used in combination with the observation data

< Second Embodiment (modification of means to acquire satellite positioning correction data and/or navigation message) >

(1) Modification of means to acquire satellite positioning correction data

In the first embodiment, the observation data-generating calculation unit 240 is configured to receive the satellite positioning correction data from the QZSS satellite 270. In this embodiment, the observation data-generating calculation unit 240 is configured to receive the satellite positioning correction data from another computer device via a wired line or a wireless line. A distance between a position to which the satellite positioning correction data received from the other computer device is optimally applicable, and a position, where the positioning signals from the GNSS satellites 280 are received, may be set in a given range which enables the second observation data-related information generated by the observation data-generating calculation unit 240 to be used for the precise positioning processing by the positioning calculation unit 210. In one specific example, a distance between a position, where the satellite positioning correction data is acquired, and the position, where the positioning signals from the GNSS satellites 280 are received, may be set to be within several kilometers, preferably within 1 kilometer.

(2) Modification of means to acquire navigation message

In the first embodiment, the observation data-generating calculation unit 240 is configured to receive the navigation messages (ephemeris data) from the positioning calculation unit 210. In this embodiment, the observation data-generating calculation unit 240 is configured to receive the navigation messages from another computer device via a wired line or a wireless line. Ephemeris data is transmitted from a navigation satellite every 30 seconds. Thus, under normal conditions, it is necessary to take 30 seconds or more for acquisition of ephemeris data. In this embodiment, immediately after losing ephemeris data, the observation data-generating calculation unit 240 can acquire new ephemeris data from the other computer device. In this case, the other computer device is configured to always acquire navigation messages from satellites and store therein the acquired navigation messages. For example, when a vehicle moves from an environment where it is difficult for radio waves to penetrate and it is necessary to use INS (Inertial Navigation System) or the like, such as an inside of a tunnel, to an outdoor environment such as an outside of the tunnel, navigation messages containing at least ephemeris data can be quickly acquired by acquiring the navigation messages from an additional computer device, instead of a navigation satellite.

(3) Modification of means to acquire satellite positioning correction data and navigation messages

In one embodiment, the observation data-generating calculation unit 240 may be configured to receive both the satellite positioning correction data and the navigation messages from another computer device. In this case, the satellite positioning correction data and the navigation messages may be transmitted from a single computer device. Alternatively, the satellite positioning correction data and the navigation messages may be transmitted, respectively, from different computer devices.

In the above embodiments, an accurate position having an error of about several centimeters can be derived. Thus, such an accurate position can be used for an automated driving or assisted driving function of a vehicle or a marine vessel.

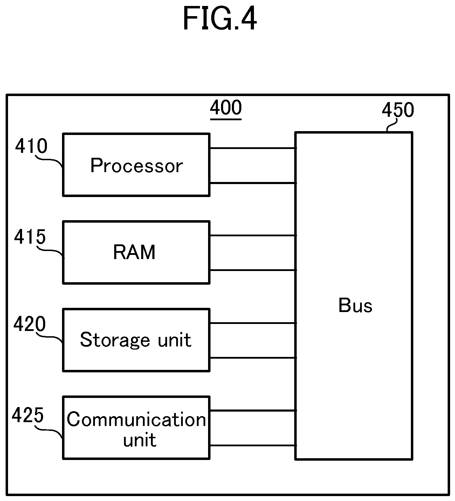

The functions to be performed by the positioning calculation unit 210 and/or the observation data-generating calculation unit 240 described in the above embodiments may be realized by software. FIG. 4 is a block diagram depicting a configuration of a device for executing such software. A device 400 comprises at least a processor 410, a RAM 415, a storage unit 420 such as a hard disk or a flash disk, and a communication unit 425. In the device 400, a part of all of the processor 410, the RAM 415, the storage unit 420 and the communication unit 425 are connected to each other via a bus 450.

The processor 410 is operable to execute functions of the aforementioned positioning calculation unit 210 and/or observation data-generating calculation unit 240, based on a computer program stored in the storage unit 420. The communication unit 425 is operable to communicate with at least one of a GNSS satellite, a QZSS satellite, a telephone network and the Internet, via a wired line or a wireless line. When the positioning calculation unit 210 and/or the observation data-generating calculation unit 240 are disposed, respectively, in different housings, it is necessary to provide the apparatus 400 by a number of at least two, wherein the function of the positioning calculation unit 210 and the function of the observation data-generating calculation unit 240 may be implemented, respectively, by a first device 400 and a second device 400. The storage unit 420 stores therein a computer program for realizing a part or an entirety of the function of the positioning calculation unit 210, and/or a part or an entirety of the function of the observation data-generating calculation unit 240.

<Third Embodiment (example where movable body is configured to avoid collision with another object>

There is a need for technology for avoiding collision or an aid for avoiding collision in which a movable body is configured to avoid collision with another object such as a pedestrian, a bicycle user or the like, and an object such as a road sign indicative of under construction or the like, and an accurate position (a positioning for realizing error of a range is degrees of centimeters) of the movable body is obtained.

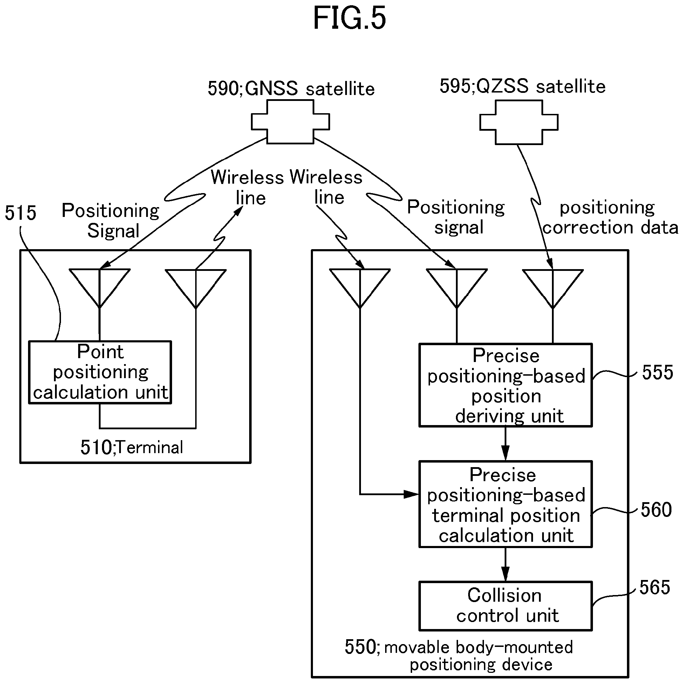

FIG. 5 depicts a positioning processing system according to a third embodiment of the present invention. The positioning processing system 500 comprises at least a terminal 510, a movable body-mounted positioning device 550, and five or more GNSS satellites 590. The terminal 510 and the movable body-mounted positioning device 550 are communicatably connected to each other, and capable of mutually transmitting and receiving data. The communication is realized in the form of wired communication or wireless communication. Preferably, wireless communication is selected. In one specific example, the communication between the terminal 510 and the movable body-mounted positioning device 550 may be unidirectional communication from the terminal 510 to the movable body-mounted positioning device 550.

The terminal 510 is a device capable of executing point positioning. Typically, the terminal 510 may be a mobile phone, a smartphone, a portable game machine, a wearable device such as a smartwatch or smart-glasses, or the like. The movable body-mounted positioning device 550 is a device capable of executing point positioning realized with an error of several meters to several tens of meters, and precise positioning realized with an error of several centimeters to 1 meter. For example, the movable body-mounted positioning device 550 may be a navigation system, an automated driving device or a highly-functional GPS device for a vehicle, a marine vessel or the like. The terminal 510 and the movable body-mounted positioning device 550 are shown by way of illustration, but not intended to limit them to the above specific examples.

The terminal 510 comprises at least an point positioning calculation unit 515. The terminal 510 is operable to receive positioning signals from the GNSS satellites 590, and execute the point positioning based on the positioning signals to thereby specify a position of the terminal 510. In this process, the point positioning is typically realized with an error of several meters to several tens of meters. A commonly-used mobile phone, smartphone, wearable device or the like is capable of executing point positioning. Thus, any of these devices is suitable for the terminal 510.

The terminal 510 is operable to derive first observation data based on the positioning signals received from the GNSS satellites 590 by using the point positioning calculation unit 515 and/or a processor of the terminal 510. For example, the first observation data comprises a distance (pseudo-distance) from the terminal 510 to each of the GNSS satellites 590, and/or a phase of a carrier wave (carrier phase). The terminal 510 is operable to transmit the first observation data to the movable body-mounted positioning device 550. The terminal 510 is operable, in response to detecting that the movable body-mounted positioning device 550 is located at a given distance therefrom, to transmit the first observation data to the movable body-mounted positioning device 550. The terminal 510 is operable, in response to detecting that the terminal 510 moves into a range which enables Wi-Fi communication or Bluetooth communication with the movable body-mounted positioning device 550, to start to transmit the first observation data. In one specific example, information to be transmitted by the terminal 510 may be information related to the first observation data (first observation data-related information). The first observation data-related information may comprise one or more of the first observation data, a correction value for the first observation data, information necessary for calculating the first observation data and/or the first observation data correction value, and other information.

The movable body-mounted positioning device 550 comprises at least a precise positioning-based position deriving unit 555, a precise positioning-based terminal position calculation unit 560, and a collision control unit 565. The precise positioning-based position deriving unit 555 is operable to perform RTK-PPP processing using the positioning signals from the five or more GNSS satellites 590 and positioning correction data from at least one QZSS satellite 595 to derive an accurate position of the movable body-mounted positioning device 550. In one specific example, the precise positioning-based position deriving unit 555 may be configured to derive an accurate position of the movable body-mounted positioning device 550 by the previously known RTK method using an continuously operating reference station, or the like. This example involves cost problems such as communication cost, as mentioned above. Despite the presence of this problem, this example is encompassed within the technical scope of the present invention. The movable body-mounted positioning device 550 may comprise a receiving unit for receiving the positioning signals from the GNSS satellites 590 and/or a signal indicative of the positioning correction data from the QZSS satellite 595, depending on a method for deriving an accurate position.

The precise positioning-based terminal position calculation unit 560 is operable to derive an accurate position of the terminal 510 based on the first observation data-related information received from the terminal 510, although details thereof will be described later. The collision control unit 565 is operable, based on the accurate positions of the terminal 510 and the movable body-mounted positioning device 550, to derive a relative distance between the terminal 510 and the movable body-mounted positioning device 550.

The collision control unit 565 is operable to determine whether or not the relative distance is equal to or less than a given threshold, or is less than a threshold. A vehicle or marine vessel mounting provided with the movable body-mounted positioning device 550 may be configured to, in response to detecting that the relative distance is equal to or less than a given threshold, or is less than a threshold, to start braking processing, or start to generate a visual alert such as an image, an audio alert such as sound, a tactile alert such as vibration or another type of alert. For example, the visual alert may comprise a technique of turning on a given lamp, and/or a technique of presenting a position of the terminal 510 on a screen navigation system. The audio alert may comprise a technique of generating warning sound. The tactile alert may comprise a technique of vibrating a driver seat or a steering wheel. The magnitude of each of the above alerts may be changed according to the relative distance. For example, as the relative distance becomes smaller, a ratio of the presented position to the entire screen image, sound or vibration is adjusted to become larger.

The given threshold may be set as such that it corresponds to a stopping distance. For example, in a vehicle, the stopping distance is derived by adding a braking distance to a brake reaction distance (free running distance). It is also known that the braking distance increases in proportion to the square of a traveling speed of the vehicle. Thus, the threshold may be changed according to the traveling speed of the vehicle. It is known that there is the following relation among vehicle speed, stopping distance, brake reaction distance, and breaking distance.

| Vehicle Speed (Km/h) | Stopping Distance (m) | Brake Reaction Distance (m) | Breaking Distance (m) |
|---|---|---|---|
| 20 | 8 | 6 | 2 |
| 40 | 20 | 11 | 9 |
| 60 | 37 | 17 | 20 |
| 80 | 58 | 22 | 36 |
| 100 | 84 | 28 | 56 |
| 120 | 114 | 33 | 81 |

In one specific example, when respective positions of the terminal 510 and the movable body-mounted positioning device 550 can be specified in terms of a traveling direction of a vehicle and a lateral direction orthogonal to the traveling direction, the alert or braking processing may be performed according to respective lateral positions of the terminal 510 and the movable body-mounted positioning device 550. For example, when the lateral position of the terminal 510 falls within a given lateral length (e.g., a width of the vehicle) including the lateral position of the movable body-mounted positioning device 550, it is possible to start the braking processing, or more effectively generate the alert.

In this embodiment, the terminal 510 is not required to perform precise positioning, so that a commonly-used mobile phone or the like may be used as the terminal 510. The precise positioning requires additional hardware and additional battery. Thus, from the viewpoint of popularization of terminals, it is important to keep the terminal 510 from performing the precise positioning. On the other hand, the movable body-mounted positioning device 550 to be provided in a vehicle can be designed to have a sufficient battery capacity, and it is easy to add hardware thereto, as compared to the terminal 510. Thus, the configuration of this embodiment can contribute to popularization of automated driving for a vehicle or the like.

< Processing in precise positioning-based terminal position calculation unit >

One example of positioning processing of the terminal 510 in the third embodiment will be described in more detail. The following description will be made for the purpose of providing easy understanding of the embodiment, but not meant to be construed in a limiting sense. The technical scope of the present invention shall be construed only based on the appended claims.

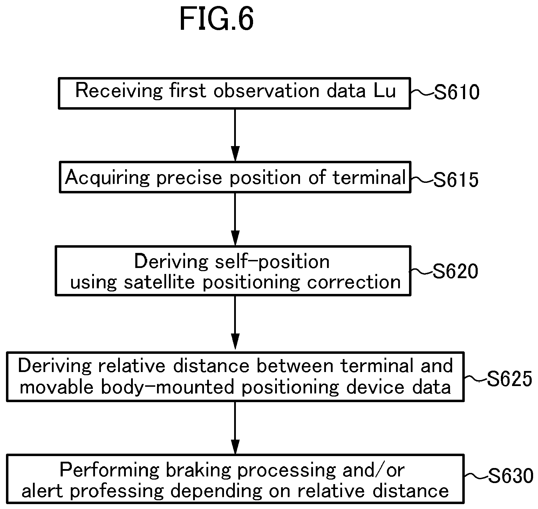

FIG. 6 is a flow chart depicting processing to be executed in the third embodiment. For the following description, various definitions will be made as follows.

- First observation data (GNSS satellite observation data at the terminal 510): Lu
- Second observation data (GNSS satellite observation data at the movable body-mounted positioning device 550): Lv
- Pseudo-distance error: C
- Random error: $\varepsilon$
- Position of the terminal 512: Xu (x, y, z)

The movable body-mounted positioning device 550 receives the first observation data Lu transmitted by the terminal 510 (step S610) and acquire a precise position (x, y, z) of the terminal 510 (step S615). In this process, a distance between the terminal 510 and the movable body-mounted positioning device 550 is within a given distance range which enables Wi-Fi communication or the like therebetween, i.e., in the range of several meters to several hundred meters. Thus, it is assumed that the first observation data Lu and the second observation data Lv are almost identical in terms of a tropospheric propagation error and an ionosphere propagation error included therein. Further, a satellite orbit error, a satellite clock error and a satellite signal bias error observed at two points of the movable body-mounted positioning device 550 and the terminal 510 are unique to each satellite, and thus values thereof are the same at the terminal 510 and the movable body-mounted positioning device 550. Thus, a difference between errors included in the first observation data Lu and the second observation data Lv corresponds to differences in terms of a clock error, a pseudo-distance error C due to delay in an internal circuit, and a random error $\varepsilon$ due to thermal noise, in respective different positioning signal receivers provided in the terminal 510 and the movable body-mounted positioning device 550.

A difference between the first and second observation data (pseudo-distance) can be expressed by the following formula:

$$Lu\,(x,\,y,\,z) - Lv = \Delta + C + \varepsilon \quad \text{--- Formula 1}$$

As an assumption of this embodiment, the movable body-mounted positioning device 550 is configured to perform point positioning, and thus has known second observation data Lv. Therefore, Lu and Lv are known, and five values x, y, z, C and $\varepsilon$ are unknown. In principle, the formula 1 may be expressed with respect to four or more GNSS satellites (actually, the number of GNSS satellites is five or more so as to eliminate uncertainty), and the four unknown quantities (x, y, z, C), except the random errors $\varepsilon$, may be derived by the least-square method. In this case, the random errors are averaged and become 0, so that the four unknown quantities (x, y, z, C) can be derived. In this way, a precise position (x, y, z) of the terminal 510 can be derived with an error of several centimeters.

The movable body-mounted positioning device 550 derives with a self-position with centimeter-order accuracy by the RTK-PPP method using the satellite positioning correction data received from the QZSS satellite 595 (step S620). Then, the movable body-mounted positioning device 550 derives a relative distance with respect to the terminal 510 (step S625). The movable body-mounted positioning device 550 performs the braking processing for the movable body and/or the alert professing for a passenger of the movable body, depending on the relative distance (step S630).

In this embodiment, the observation data is used. Alternatively, a correction value for the observation data may be used. In the case where the functions of the terminal 510 and/or the movable body-mounted positioning device 550 in this embodiment are realized by software, each or one of the terminal 510 and/or the movable body-mounted positioning device 550 may be configured as depicted in FIG. 4. In this case, the processor 410 is operable to execute functions of the terminal 510 and/or the movable body-mounted positioning device 550, based on a computer program stored in the storage unit 420. The communication unit 425 is operable to communicate with at least one of a GNSS satellite, a QZSS satellite, a telephone network and the Internet, via a wired line or a wireless line. The storage unit 420 stores therein a computer program for realizing a part or an entirety of the function of the terminal 510, and/or a part or an entirety of the function of the movable body-mounted positioning device 550.

A functional unit or unit described in the above embodiments may be realized by a circuit, a circuit board, a programmable logic device such as FPGA, or the like.

In the above embodiments, an error of the point positioning result has been described to be from several meters to several tens of meters, and an error of the precise positing result has been described to be from several centimeters to 1 meter. However, these are shown as one example, and the point is that the precise positing result has an accuracy higher than that of the point positioning result.

In the above embodiment, the wireless communication may be realized, for example, by a mobile phone network, a Wi-Fi communication network, Bluetooth, DSRC, or ZigBee.

A control unit such as the driving control unit 135 depicted in FIG. 1 is operable to control a vehicle as a controlled object using the precise positing result. By modifying the control unit 135 such that an output from a device for deriving the precise positing result in the above embodiments (precise positioning calculation unit 220, etc.) is connected thereto, the present invention can be easily applied to an existing vehicle as a controlled object. It should be noted that the controlled object to be controlled by the control unit 135 is not limited to a vehicle, but may be any other suitable movable body such as a marine vessel, a flying object, a wheelchair, a bicycle, a motorbike, etc.

Although the above embodiments have been described based on an example where the RTK-PPP method is used for a position as the precise positioning result, the precise positioning may be realized by any other suitable method. In the above embodiments, the satellite positioning correction data is generated by the RTK-PPP method. However, the method for generating the satellite positioning correction data may be modified depending on the method for calculating a position based on the precise positioning.

In the above embodiments, a GNSS satellite is used as a navigation satellite for transmitting a positioning signal. However, such a satellite may be any satellite used in GPS, Galileo, GLONASS, quasi-zenith satellite system, BeiDou, NAVIC, and other positioning systems. Further, in the above embodiments, a QZSS satellite configured to generate satellite positioning correction data by the RTK-PPP method is used as a navigation satellite for emitting satellite positioning correction data. However, such a satellite may be any satellite used in GPS, Galileo, GLONASS, quasi-zenith satellite system, BeiDou, NAVIC and other positioning systems, as long as it is capable of emitting satellite positioning correction data. In this case, the method for calculating a position based on the precise positioning may be modified depending on the method for generating the satellite positioning correction data.

It should be understood that a part or an entirety of some elements described such that they may be realized by hardware in the above embodiments can be realized by software, and a part or an entirety of some elements described such that they may be realized by software in the above embodiments can be realized by hardware.

In the aforementioned process or steps of the process, the sequence of the process or steps may be freely changed unless it causes inconsistency in process or steps, such as a situation where data which must be, yet, is unable to be used in a certain step is used in the step.

In the above embodiments, a part and an entirety of two or more of them may be combined together as one embodiment.

In any country where it is permitted to incorporate papers and documents in the specification by reference, the contents of any papers and documents referred to in the above Description are incorporated herein by reference.

While the present invention has been described based on the above embodiments by way of illustration, it should be noted that the present invention is not limited to the embodiments in any way. It is obvious to a person of ordinary skill in the art that various changes and modifications may be made therein without departing from the spirit and scope thereof as set forth in appended claims.

LIST OF REFERENCE SIGNS

200: positioning device
210: positioning calculation unit

215: point positioning calculation unit
220: precise positioning calculation unit
240: observation data-generating calculation unit
270: QZSS satellite
280: GNSS satellite
500: positioning processing system
510: terminal
515: point positioning calculation unit
550: movable body-mounted positioning device
555: precise positioning-based position deriving unit
560: precise positioning-based terminal position calculation unit
565: collision control unit
590: GNSS satellite
595: QZSS satellite

**Claims**

1.  A positioning processing device comprising:

    a positioning calculator performing extraction of information necessary for performing point positioning, and/or point positioning, based on a positioning signal received from a navigation satellite, and executing positioning processing having an accuracy higher than that of the point positioning, using second observation data-related information; and
    an observation data-generating calculator operable to: receive satellite positioning correction data and information based on the positioning signal; receiving information related to the point positioning from the positioning calculator; generating the second observation data-related information, based on said information based on the positioning signal, the satellite positioning correction data and a result of the point positioning derived from the information related to the point positioning; and transmit the second observation data-related information to the positioning calculator.

2.  The positioning processing device of claim 1, wherein the information based on the positioning signal comprises at least ephemeris data of the navigation satellite.

3.  The positioning processing device of claim 1 or 2, wherein the information based on the positioning signal is transmitted from the navigation satellite to the positioning processing device, or transmitted from the navigation satellite to the positioning processing device via another device.

4.  The positioning processing device of any one of claims 1 to 3, wherein the satellite positioning correction data is transmitted from the navigation satellite or a different navigation satellite to the observation data-generating calculation unit, or transmitted from the navigation satellite or a different navigation satellite to the observation data-generating calculation unit via another device.

5.  The positioning processing device of any one of claims 1 to 4, wherein the positioning calculation unit and the observation data-generating calculation unit are disposed in the same housing.

6.  The positioning processing device of any one of claims 1 to 4, wherein the positioning calculation unit and the observation data-generating calculation unit are disposed, respectively, in different housings.

7.  A method to be executed by a positioning calculation unit and an observation data-generating calculation unit, comprising the steps of:

    performing, by the positioning calculation unit, extraction of information necessary for performing point positioning, and/or point positioning, based on a positioning signal received from a navigation satellite;
    receiving, by the observation data-generating calculation unit, satellite positioning correction data and information based on the positioning signal;
    receiving, by the observation data-generating calculation unit, information related to the point positioning, from the positioning calculation unit;

generating, by the observation data-generating calculation unit, a second observation data-related information, based on said information based on the positioning signal, the satellite positioning correction data and a result of the point positioning, derived from the information related to the point positioning; and
transmitting, by the observation data-generating calculation unit, the second observation data-related information to the positioning calculation unit.

8. The method of claim 7, which further comprises the step of executing, by the positioning calculation unit, positioning processing having an accuracy higher than that of the point positioning, using the second observation data-related information.

9. A recording medium recording a computer program for performing the method of any of claims 7 or 8.

10. An apparatus comprising the positioning processing device of any one of claims 1 to 6, wherein the apparatus is operable to perform control using the result of the higher-accuracy positioning processing.

11. The positioning processing device of any one of claims 1 to 4 and 6, wherein the positioning calculation unit comprises an point positioning section operable to perform point positioning, and a higher-accuracy positioning section operable to perform positioning processing having an accuracy higher than that of the point positioning, and wherein the point positioning section and the higher-accuracy positioning section are disposed, respectively, in different housings.

# FIG.1

150;GNSS satellite

Positioning
signal

120

(Weak radio wave)

125

DEM

105

110

DEM

170; Private reference
station

130

Positioning
processing unit

135

Driving
control unit

100; Automated driving device

# FIG.2

270; QZSS satellite

280;GNSS satellite

240

Positioning
correction data

Positioning
signal

200

210

Observation
data-generating
calculation unit

Point
positioning
calculation unit

215

220

precise
positioning
calculation
unit

RTK
precise
positioning
result

# FIG.3

```
┌─────────────────────────────────┐
│ Acquiring positioning signals   │─S310
└─────────────────────────────────┘
              │
              ▼
┌─────────────────────────────────┐
│ Generating first observation data L'│─S315
└─────────────────────────────────┘
              │
              ▼
┌─────────────────────────────────────────────────┐
│       Transmitting navigation messages D and     │
│    Point positioning result-based position X'    │─S320
│  to observation data generation calculation unit │
└─────────────────────────────────────────────────┘
              │
              ▼
┌─────────────────────────────────────────────┐
│ Receiving satellite positioning correction data C │─S325
└─────────────────────────────────────────────┘
              │
              ▼
┌─────────────────────────────────────────────────┐
│ Deriving information about second observation data L │─S330
└─────────────────────────────────────────────────┘
              │
              ▼
┌─────────────────────────────────────────────────┐
│ Transmitting second observation-related information │
│   and Point positioning result-based position X'   │─S335
│        to precise positioning calculation unit     │
└─────────────────────────────────────────────────┘
              │
              ▼
┌─────────────────────────────────────────────────┐
│ Deriving precise positioning result-based position X │─S340
└─────────────────────────────────────────────────┘
```

# FIG.4

# FIG.5

590;GNSS satellite          595;QZSS satellite

515  Positioning
     Signal

Wireless Wireless
  line    line

Positioning
signal

positioning
correction data

Point
positioning
calculation unit

510;Terminal

Precise
positioning-based
position
deriving unit          555

Precise
positioning-based
terminal position
calculation unit       560

Collision
control unit           565

550; movable body-mounted
positioning device

# FIG.6

```
┌─────────────────────────────────────┐
│   Receiving first observation data Lu │─～S610
└─────────────────────────────────────┘
                    │
                    ▼
┌─────────────────────────────────────┐
│  Acquiring precise position of terminal│─～S615
└─────────────────────────────────────┘
                    │
                    ▼
┌─────────────────────────────────────┐
│          Deriving self-position        │
│  using satellite positioning correction │─～S620
└─────────────────────────────────────┘
                    │
                    ▼
┌─────────────────────────────────────┐
│ Deriving relative distance between terminal and│
│ movable body-mounted positioning device data   │─～S625
└─────────────────────────────────────┘
                    │
                    ▼
┌─────────────────────────────────────┐
│    Performing braking processing and/or │
│ alert professing depending on relative distance │─～S630
└─────────────────────────────────────┘
```

Europäisches
Patentamt

European
Patent Office

Office européen
des brevets

## EUROPEAN SEARCH REPORT

Application Number

EP 17 19 6693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/099194 A1 (NEC CORP) 2 July 2015 (2015-07-02) * the whole document * | 1-11 | INV. G01S19/07 |
| X,P | & EP 3 088 917 A1 (NEC CORP [JP]) 2 November 2016 (2016-11-02) * paragraphs [0043] - [0120] * ----- | 1-11 | |
| X | SUZUKI TARO ET AL: "Precise point positioning for mobile robots using software GNSS receiver and QZSS LEX signal", 2013 IEEE/RSJ INTERNATIONAL CONFERENCE ON INTELLIGENT ROBOTS AND SYSTEMS, IEEE, 3 November 2013 (2013-11-03), pages 369-375, XP032537227, ISSN: 2153-0858, DOI: 10.1109/IROS.2013.6696378 [retrieved on 2013-12-26] * the whole document * ----- | 1-11 | |
| X | EP 2 260 319 A1 (TELESPAZIO SPA [IT]) 15 December 2010 (2010-12-15) * paragraph [0586] * ----- | 1-11 | TECHNICAL FIELDS SEARCHED (IPC) G01S |

The present search report has been drawn up for all claims

| Place of search | Date of completion of the search | Examiner |
|---|---|---|
| Munich | 14 March 2018 | Damp, Stephan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&&&: member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 19 6693

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2018

| Patent document cited in search report | | | Publication date | Patent family member(s) | | | Publication date |
|---|---|---|---|---|---|---|---|
| WO 2015099194 | A1 | | 02-07-2015 | CN | 105849589 | A | 10-08-2016 |
| | | | | EP | 3088917 | A1 | 02-11-2016 |
| | | | | JP | 5794646 | B2 | 14-10-2015 |
| | | | | JP | 2015125119 | A | 06-07-2015 |
| | | | | US | 2017038475 | A1 | 09-02-2017 |
| | | | | WO | 2015099194 | A1 | 02-07-2015 |
| EP 2260319 | A1 | | 15-12-2010 | CN | 102016619 | A | 13-04-2011 |
| | | | | EP | 2260319 | A1 | 15-12-2010 |
| | | | | ES | 2647765 | T3 | 26-12-2017 |
| | | | | RU | 2010142917 | A | 27-04-2012 |
| | | | | US | 2011084877 | A1 | 14-04-2011 |
| | | | | WO | 2009115128 | A1 | 24-09-2009 |

EPO FORM P0459

For more details about this annex : see Official Journal of the European Patent Office, No. 12/82